Europäisches Patentamt

(19) European Patent Office

Office européen des brevets

(11) Publication number: **0 103 969**
**B1**

(12) **EUROPEAN PATENT SPECIFICATION**

(45) Date of publication of patent specification: **29.10.86**

(21) Application number: **83304553.7**

(22) Date of filing: **05.08.83**

(51) Int. Cl.⁴: **C 09 D 11/00, A 24 D 1/02**

(54) **Printing inks and printed substrates.**

(30) Priority: **20.08.82 GB 8223982**

(43) Date of publication of application:
**28.03.84 Bulletin 84/13**

(45) Publication of the grant of the patent:
**29.10.86 Bulletin 86/44**

(84) Designated Contracting States:
**AT BE CH DE FR GB IT LI LU NL SE**

(56) References cited:
**FR-A-2 403 035**
**GB-A-1 111 007**

(73) Proprietor: **LAWRENCE, Peter Robin Broughton**
**53 to 64 Chancery Lane**
**London WC2A 1HN (GB)**

(72) Inventor: **Adams, Brian William**
**11 Mount Pleasant Road Jordanstown**
**Newtown Abbey Northern Ireland (GB)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

## Description

Alkaloids have various uses but tend to suffer from the disadvantage that it is difficult to provide prolonged and controlled availability. They are bases and so salts with simple acids can be formed but they are generally very soluble and are easily washed off surfaces. Salts with crosslinked cation exchange resins are known, but are insoluble and so are substantially inactive and are difficult to apply. For instance nicotine (which is useful as an insecticide) is very volatile and its salts with simple acids are very soluble.

In British Patent Specification No. 1,391,614 it is proposed to form nicotine pectinate or nicotine alginate and to incorporate this in smoking products. Typically a slurry is formed of tobacco winnowings and/or offal and nicotine pectinate or alginate is added to the slurry, either as powder or as solution, and the slurry is cast into a sheet. The values quoted in the specification for the nicotine content of the salts range between 20 and 31.5%. The values quoted in the specification for the concentration of the salt in solution are around 1 or 2%.

In U.S. Patent 4,236,532 there are disclosed smoking rods in which the wrapper is screen printed with dots of an ink containing a salt of nicotine, usually nicotine hydrogen tartrate. The salt is first made up into a printing ink having rheological properties suitable for screen printing by incorporating silicon dioxide and carboxymethyl cellulose into a solution of nicotine hydrogen tartrate. The essential presence of additives such as carboxymethyl cellulose for producing the necessary rheology for printing and the essential presence of volatile acidic components (tartaric acid) are both undesirable.

The presence of volatile acidic components is particularly undesirable in smoking products.

Despite the undesirability of these features, it has previously been accepted that they cannot be avoided and that successful printing of an alkaloid necessitates the inclusion of conventional printing additives and the provision of the alkaloid as a salt with a volatile acid. The present invention is based in part upon the realisation that these features can be avoided.

A printing ink according to the invention contains a solution of water soluble salt formed between an alkaloid and a polymeric acid. A method according to the invention comprises printing such an ink on a substrate.

A printed product according to the invention comprises a substrate carrying printed deposits of a water soluble salt formed between the alkaloid and a polymeric acid.

The ink preferably consists substantially only of the solvent and the salt, and thus the ink is preferably free of other viscosity regulator, binder or additional components for adjusting the rheology of other printing properties of the ink. However, if desired one or more such components may be present but it is generally unnecessary to include organic thickening agents as the alkaloid-polymeric acid salt can provide the necessary organic thickening properties. If an inorganic agent for adjusting rheology is required then this may be present. Suitable inorganic materials are silicon dioxide, titanium dioxide or similar materials. The ink may include additives required to modify the properties of the final printed substrate. For instance, if the printed substrate is to be used as a wrapper for a smoking rod the ink may include smoking additives such as flavourants, smoke producers or burn modifiers, and it may contain colouring agents.

The viscosity and other fluid properties of the ink may be selected by appropriate choice of the solids content of the ink, the particular polymeric salt and the molecular weight of the polymeric acid used for forming the salt. The viscosity is generally chosen such that it is between 10 and 500 poise (1—50 Pa.s), the precise value being selected according to the method of printing. For instance gravure printing viscosity is preferably in the range of 20 to 200, most preferably 50 to 150 poise (2 to 20, most preferably 5 to 15 Pa.s) while for screen printing viscosity is preferably in the range 100 to 450, most preferably 150 to 400 poise (10 to 45, most preferably 15 to 40 Pa.s).

The solvent of the ink must be one in which the salt is soluble, that is to say in which the salt forms a true or colloidal solution. Generally the solvent is a polar solvent. It may be an organic polar solvent, for instance an alcohol, but preferably is water or a blend of water and an organic polar solvent.

The alkaloid may be any alkaloid that will form a salt with the polymeric acid. Preferred alkaloids are nicotine, anabasine and nornicotine. The alkaloids may be compounds that can occur naturally or they may be analogues or derivatives thereof that have to be synthesised. Nicotine is the most preferred alkaloid.

The ink is preferably substantially free of any alkaloid that is not present as salt with the polymeric acid.

A polymeric acid is a polymer containing a recurring moiety that includes at least one acid group. The polymeric acid can therefore be any such polymer which is capable of forming a water soluble salt having the desired alkaloid content. By saying that the salt is water soluble we mean that it forms a true solution or a colloidal solution in water or in an aqueous organic solvent.

The acidic groups of the polymeric acid are generally carboxylic groups but other salt forming acid groups that may be present include phosphate, borate, sulphate and sulphonate.

The polymeric acid may be naturally occurring or synthetic. If naturally occurring, it is generally modified so as to increase its content of acidic groups, so as to permit increased alkaloid content in the salt. The salt will usually contain at least 20%, and often at least 30% by weight alkaloid, but by increasing the content of acid groups the amount of alkaloid in the salt can be increased to at least 40% and even up to 60% or more.

Preferably it is a polysaccharide that has been modified by increasing its acidic content. The average number of acid groups per saccharide unit is generally increased by at least 0.1 and preferably at least 1. The preferred way of increasing its acidic content is by carboxyalkylation. The alkyl group of the carboxyalkyl generally contains 1 to 6, preferably 1 to 4, carbon atoms, e.g. methyl or butyl. Another way of increasing acidity is by reaction with a polybasic acid (or a salt thereof followed by acidification if necessary). Suitable polybasic acids include phosphoric, boric, sulphuric, tartaric and malonic acids. The polybasic acid is usually dibasic or tribasic.

The polysaccharide may be formed from 5 membered rings but preferably is formed from 6 membered rings. Suitable polysaccharides include alginic acid and pectic acid. The salts of these disclosed in British Patent Specification No. 1,391,614 might be usable in some printing methods but they tend to be rather unsatisfactory since salts of alginic acid and pectic acid inevitably tend to have a high molecular weight and therefore to form very viscous solutions even at low concentrations. Accordingly when using such salts it is generally only possible to obtain very low add-ons of nicotine. More satisfactory results can be obtained if the alginic acid, pectic acid or other polysaccharide has been modified to increase its acid content, generally by carboxyalkylation or by reaction with a polybasic acid, to increase the degree of acidic substitution by at least 0.1 (i.e. to increase the average number of acid groups per saccharide unit by at least 0.1). Generally the degree of substitution is increased by between 0.8 or 1 and 2. Suitable polysaccharides therefore include borated, carboxymethylated, carboxybutylated or phosphated alginic or pectic acid having degrees of acidic substitution increased by between 0.1 and 2.

The preferred polysaccharide is cellulose, partly because of the ready availability of relatively low molecular weight celluloses. Again it is desirable to modify it by acidic substitution of at least 0.1, and preferably from 0.8 or 1 to 3. Any hydroxyl group in the cellulose or other polysaccharide remaining after the acidic substitution may be present as free hydroxy groups or may be present as ether groups formed with, for instance, $C_{1-6}$ alkyl or hydroxy alkyl groups such as methyl, ethyl, hydroxyethyl and hydroxypropyl.

Preferred cellulosic compounds are carboxymethylated and carboxybutylated cellulose and cellulose phosphate, each having degrees of acidic substitution of at least 0.8 or 1 and up to 3, and the corresponding compounds in which the hydroxy groups in the ring are converted to ethers by methyl, ethyl, hydroxyethyl or hydroxypropyl groups.

The polysaccharide will contain at least 3 units and normally more, for instance at least 40 and often at least 100 units. It is generally desirable that it does not contain more than 10,000 units and normally it contains considerably less than this, typically below 5,000 units, since the higher molecular weights result in the products forming very viscous solutions that can be difficult to handle. Preferably the polysaccharide contains less than 1,000 units and best results are often obtained with polysaccharides containing from 50 to 300 units.

Preferred synthetic polymers that may be used as the polymeric acids in the invention include polymers of acrylic, methacrylic and maleic acids. The polymers preferably contain from 500 to 4,000 recurring units and thus may have molecular weights ranging from, for instance, 10,000, to 1 million but again the lower molecular weights, typically 10,000 to 100,000, are often preferred. For some purposes other polymeric acids may be used, for instance polymers of butadiene carboxylic acid and linear styrene sulphonic acid. Although high molecular weight synthetic polymers (e.g. polyacrylic acid, molecular weight above 100,000) can give useful results, generally the best printing compositions are formed using polysaccharide acids.

The polymeric acids are known materials or can be made by methods analogous to well known methods. Alkaloid salts of the polymeric acids can be made by combining the alkaloid with the polymeric acid while dissolved in a polar solvent. If the polymeric acid is initially provided in the form of an alkali metal salt (for instance sodium carboxymethyl cellulose) it is preferably converted to its free acid form before being mixed with the alkaloid. This conversion may be conducted in known manner by treatment with mineral acid but we have found that the best results, and the highest conversion and consequently the highest eventual alkaloid content, is obtainable if the conversion is conducted by ion exchange with a cationic exchange resin.

The customary way of isolating an amine salt is to crystallise or precipitate it from the solution in which it is formed and to separate the precipitate by filtration. For instance upon addition of nicotine to an aqueous solution of polyacrylic acid or other synthetic polymer a precipitate of polyacrylic alkaloid salt forms on standing and can be separated by filtration.

A salt can also be formed in similar manner when a polysaccharide acid is used in place of the polyacrylic acid but the yield of salt, and in particular the nicotine content of the salt, is liable to be rather low. It has surprisingly been found that improved results can be obtained if a solution is formed of the polysaccharide alkaloid salt by combining the polysaccharide and the alkaloid in a polar solvent and this solution is then evaporated. Evaporation may be conducted to completion to give a solid, or a solid may be separated from a concentrated solution by crystallisation or precipitation, and the solid may then be redissolved in the chosen polar solvent to form the printing ink. Preferably however the printing ink is made merely by evaporating the solution down to the desired concentration and physical properties.

Evaporation may be by conventional methods, e.g. by distillation (preferably under reduced pressure) or by spray drying.

The concentration of the salt in the printing ink is generally at least 10% or 20% by weight and most preferably 30 to 40% by weight and may be up to 50%. The concentration of nicotine or other alkaloid, present as salt with polymeric acid, is generally at least 10% by weight of the ink, normally at least 17% and preferably from 20 to 25% or more.

The sheet substrate that is printed in the invention is generally paper but any substrate may be used provided it is suitable for the intended final use of the printed product. Printing may be by conventional printing techniques such as screen or gravure printing. Preferably the ink is printed as a pattern made up of dots. The printed dots or other deposits preferably stand above the substrate and typically are from 50 to 100 microns high and from 0.2 to 1.0 mm in diameter or other maximum dimension.

The printed substrate may be used as a source by which the alkaloid can exert its known properties but with controlled release at a chosen location. If the alkaloid (e.g. anabasine or nicotine) is an insecticide the substrate will be insecticidal.

Preferably however the alkaloid is nicotine and the printed substrate forms a component of a smoking rod and, more preferably, is used as a wrapper for a smoking rod. Thus the benefits described in US Patent No. 4236532 may be attained without incurring the disadvantages of including tartaric acid and additional carboxymethyl cellulose.

The following are examples of the invention.

Example 1

30 g sodium carboxymethyl cellulose having a degree of substitution of 1.2 and an average degree of polymerisation of around 1,100 was gelled in 300 mls water. 50 g of a cation exchange resin sold under the trade name Duolite 225 in the acid form was mixed into the solution and the mixture left for 1 hour. The resulting gel was filtered through a muslin cloth to remove the ion exchange resin and was a solution of the acid form of carboxymethyl cellulose.

30 g nicotine was added to the filtrate and the mixture stirred well. Water was removed from the solution by distillation and reduced pressure using a rotary evaporator. Evaporation was continued until the solution had become sufficiently concentrated that it had a consistency suitable for printing. At this stage its solid content was about 33% by weight and analysis showed that its nicotine content was about 17% by weight.

Its viscosity was 130 poise (13 Pa.s).

The solution was then printed by gravure onto one surface of a conventional cigarette paper and the dots were dried by exposure to air at 100°C for 1 minute. The dried dots had a diameter of about 1 mm a height of about 75μ and the separation between their centres was substantially uniform and was about 2 mm. The dry weight of the printed material was about 3 mg/cm² and analysis showed that the dots consisted of a nicotine salt of carboxymethyl cellulose containing 47% by weight nicotine. Nicotine could not be removed from the deposits by washing with hexane or diethyl ether.

In another process the solution was concentrated to a solids content of about 20% and printed onto the surface of conventional paper using a gravure printer. The print was dried by exposure to air at a temperature of 100°C for one minute. The dried print dots had a diameter of about 1 mm and a height of approximately 40 microns, the distance between print dots centred being about 2 mm. The weight of printed material was about 1.9 mg/cm² and the nicotine content of the dots was about 44% by weight.

Example 2

288 g of carboxybutyl cellulose having a degree of substitution of 1.2 and a degree of polymerization of less than 1,100 was slurried in 2,500 ml of water 200 g of free base nicotine was added to the slurried mixture and the stirring continued until a homogenous gel was formed. The gel was suitable for use as a printing composition. Printed deposits contained 40% by weight of free base nicotine.

Example 3

50 g of carboxymethyl hydroxypropyl cellulose prepared by carboxymethylation of hydroxypropyl cellulose having a degree of polymerisation of less than 500 was dispersed in 500 ml of water. 36 g of free base nicotine was added to the stirred dispersion: a homogenous gel suitable for use as a printing composition was obtained. Printed deposits contained 40% nicotine.

Example 4

50 g of cellulose phosphate having a degree of substitution of 0.9 and a degree of polymerisation of less than 1,000 was dispersed in 500 ml of water. 38 g of free base nicotine was added to the stirred dispersion and stirring continued until a homogenous gel was formed. The gel is suitable for use as a printing composition. Printed deposits contain 43% by weight of nicotine.

Example 5

195 g of alginic acid phosphate ester having a degree of substitution of 0.9 and a degree of polymerisation of 1000 was slurried in 1950 ml of water. 215 g of free base nicotine was added to the slurry under conditions of high speed stirring; a homogenous gel was formed which was suitable for use as a printing composition. Printed deposits contained 53% nicotine.

Example 6

175 g of alginic acid (Alginate Industries, LDB grade) was slurried in 1450 ml of water and 180 g of free base nicotine added to the slurried suspension. 31 g of ortho boric acid dissolved in 600 ml of water was added to the gelled solution causing the viscosity of the gel to increase markedly. The gelled product is suitable for use as a printing composition. Printed deposits contain 50% by weight of nicotine.

## Example 7

76 g of alginic acid was slurried in a solvent mixture comprising 480 mls of methanol and 120 ml of water. 112 g of free base nicotine was added to the slurry which was high speed stirred until a homogenous gel with viscosity in the region of 150—400 poise (15—40 Pa.s) was formed; the gel was printed on a roller screen printer and the print dried by exposure to air at a temperature of 90°C for 1 minute. The dried print dots had a diameter of about 1 mm and a height of approximately 60 microns. The nicotine content of the printed dots was approximately 38% by weight.

## Example 8

The printing ink composition described in Example 7 was diluted with 4:1 methanol water to give a printing composition with a viscosity of 150 poise (15 Pa.s) at 20°C. The composition was applied to conventional cigarette paper by gravure printing and the print dried by exposure to air at a temperature of 85°C for a time of 1 minute. The printed dots had a diameter of approximately 1 mm and a height of about 45 microns. The nicotine content of the printed dots was approximatley 38% by weight.

## Example 9

19.5 g of alginic acid phosphate ester having a degree of substitution of 0.9 and a degree of polymerisation of 1000 is slurried with 200 ml of water. 21.5 g of anabasine, 1-2(3-pyridyl)-piperidine, is added and the mixture stirred well. A homogeneous gel is formed which is suitable for use as a printing composition. Printed deposits contain 51% anabasine.

## Example 10

19.5 g of alginic acid phosphate ester having a degree of substitution of 0.9 and a degree of polymerisation of 1000 is slurried i- 200 mls of water. 19.5 g of nornicotine, 1-3(2-pyrrolidyl) pyridine is added and the mixture stirred well. A homogeneous gel is formed which is suitable for use in a printing composition. Printed deposits contain 48% nornicotine.

## Example 11

73 g of polyacrylic acid having a degree of polymerisation of 3000 is dispersed in 1 litre of water and 73 g of free base nicotine added to the stirred mixture. Evaporation of solvent under reduced pressure gives a brittle hygroscopic solid which contains 50% by weight of nicotine. The nicotine cannot be removed by repeated washing with hexane.

The solution can be used for printing after partial evaporation.

## Claims

1. A printing ink containing a solution of a water soluble salt formed between an acid and an alkaloid characterised in that the salt forms a true solution or a colloidal solution and serves as binder and viscosity regulator and the acid is a polymeric acid.

2. An ink according to claim 1, in which the alkaloid, binder and viscosity regulator components of the ink consist substantially only of the aqueous solution of the salt and the ink optionally contains one or more additives selected from colouring agents, flavourant, smoke producers and burn modifiers.

3. An ink according to claim 1, in which the alkaloid is selected from nicotine, anabasine and nornicotine, preferably nicotine.

4. An ink according to any preceding claim in which the polymeric acid is a polysaccharide selected from alginic acid, pectic acid and cellulose and in which the polysaccharide preferably has been modified to increase its acidic content by carboxyalkylation or reaction with polybasic acid.

5. An ink according to any preceding claim in which the amount of alkaloid is at least 40% by weight of polymeric acid and alkaloid.

6. An ink according to claim 1 in which the amount of the salt in the solution is at least 20% by weight.

7. An ink according to claim 1 having a viscosity of from 10 to 500 poise (1 to 50 Pa.s).

8. A process of printing in which an ink is printed onto a substrate, preferably by gravure or screen printing, characterised in that the ink is an ink according to any of claims 1 to 7.

9. A printed product, preferably a smoking rod wrapper, comprising a substrate, preferably paper, carrying printed deposits of a water soluble salt formed between an alkaloid and an acid characterised in that the acid is a polymeric acid, preferably a polysaccharide acid.

10. A product according to claim 9, in which the alkaloid is substantially entirely present as a salt with the polymeric acid, the alkaloid is nicotine, and the polymeric acid is a polysaccharide.

## Patentansprüche

1. Drucktinte mit einem Gehalt einer Lösung eines zwischen einer Säure und einem Alkaloid gebildeten wasserlöslichen Salzes, dadurch gekennzeichnet, daß das Salz eine echte Lösung oder eine kolloidale Lösung bildet und als Bindemittel und Viskositätsregler wirkt und die Säure eine polymere Säure ist.

2. Drucktinte nach Anspruch 1, worin die Alkaloid-, Bindemittel- und Viskositätsreglerbestandteile der Tinte im wesentlichen nur aus der wässerigen Lösung des Salzes bestehen und die Tinte gegebenenfalls ein oder mehrere Additive, ausgewählt unter Farbstoffen, Geschmacksmitteln, Raucherzeugern und das Brennverhalten modifizierenden Mitteln, enthält.

3. Tinte nach Anspruch 1, worin das Alkaloid unter Nikotin, Anabasin und Nornikotin ausgewählt ist und vorzugsweise Nikotin ist.

4. Tinte nach einem der vorstehenden Ansprüche, worin die polymere Säure ein Polysaccharid, ausgewählt unter Alginsäure, Pektinsäure und Cellulose ist und worin das Polysaccharid vorzugsweise zur Steigerung seines Säuregehaltes durch Carboxyalkylierung oder Reaktion mit einer mehrbasischen Säure modifiziert worden ist.

5. Tinte nach einem der vorstehenden Ansprüche, worin die Alkaloidmenge wenigstens 40% des Gewichtes von polymerer Säure und Alkaloid beträgt.

6. Tinte nach Anspruch 1, worin die Menge des Salzes in der Lösung wenigstens 20 Gew.-% beträgt.

7. Tinte nach Anspruch 1 mit einer Viskosität von 10 bis 500 Poise (1—50 Pa.s).

8. Druckverfahren, in welchem eine Tinte auf ein Substrat gedruckt wird, vorzugsweise durch Tiefdruck oder Siebdruck, dadurch gekennzeichnet, daß die Tinte eine Tinte nach einem der Ansprüche 1 bis 7 ist.

9. Bedrucktes Produkt, vorzugsweise eine Hülle für einen stabförmigen Rauchartikel, umfassend ein Substrat, vorzugsweise Papier, das aufgedruckte Ablagerungen eines wasserlöslichen, zwischen einem Alkaloid und einer Säure gebildeten Salzes trägt, dadurch gekennzeichnet, daß die Säure eine polymere Säure, vorzugsweise eine Polysaccharidsäure ist.

10. Produkt nach Anspruch 9, worin das Alkaloid im wesentlichen zur Gänze als ein Salz mit der polymeren Säure vorliegt, das Alkaloid Nikotin ist und die polymere Säure ein Polysaccharid ist.

**Revendications**

1. Encre d'impression contenant une solution d'un sel soluble dans l'eau formé entre un acide et un alcaloïde, caractérisée en ce que le sel forme une solution vraie ou une solution colloïdale et sert de liant et de régulateur de viscosité et l'acide est un acide polymère.

2. Encre selon la revendication 1, dans laquelle l'alcaloïde, le liant et les composants régulateurs de viscosité de l'encre consistent à peu près uniquement en la solution aqueuse du sel et l'encre contient facultativement un ou plusieurs additifs choisis parmi les agents colorants, les aromatisants, les producteurs de fumée et les modificateurs de combustion.

3. Encre selon la revendication 1, dans laquelle l'alcaloïde est choisi parmi la nicotine, l'anabasine et la nornicotine, de préférence la nicotine.

4. Encre selon l'une quelconque des revendications précédentes, dans laquelle l'acide polymère est un polysaccharide choisi parmi l'acide alginique, l'acide pectique et la cellulose et dans laquelle le polysaccharide a de préférence été modifié pour augmenter sa teneur en groupes acides par carboxyalkylation ou réaction avec un polyacide.

5. Encre selon l'une quelconque des revendications précédentes, dans laquelle la quantité d'alcaloïde est d'au moins 40% en poids par rapport à l'acide polymère et à l'acaloïde.

6. Encre selon la revendication 1, dans laquelle la quantité du sel dans la solution est d'au moins 20% en poids.

7. Encre selon la revendication 1, ayant une viscosité de 10 à 500 poises (1 à 50 Pa.s).

8. Procédé d'impression, dans lequel un substrat est imprimé avec une encre, de préférence par impression en creux ou sérigraphie, caractérisé en ce que l'encre est une encre selon l'une quelconque des revendications 1 à 7.

9. Produit imprimé, de préférence une robe de bâton à fumer, comprenant un substrat, de préférence du papier, portant des dépôts imprimés d'un sel soluble dans l'eau formé entre un alcaloïde et un acide, caractérisé en ce que l'acide est un acide polymère, de préférence un acide polysaccharide.

10. Produit selon la revendication 9, dans lequel l'alcaloïde est présent à peu près entièrement à l'état de sel avec l'acide polymère, l'alcaloïde est la nicotine et l'acide polymère est un polysaccharide.